# EUROPÄISCHE PATENTSCHRIFT

(11) **EP 2 961 589 B1**
(45) Veröffentlichungstag und Bekanntmachung des Hinweises auf die Patenterteilung: **27.07.2016**
(21) Anmeldenummer: 14708196.2
(22) Anmeldetag: 21.02.2014
(51) Int. Cl.: B29C 67/00, G06F 17/50

(54) **VERFAHREN ZUR HERSTELLUNG EINES DREIDIMENSIONALEN GEGENSTANDES DURCH GENERATIVEN AUFBAU**
METHOD FOR PRODUCING A THREE-DIMENSIONAL OBJECT BY MEANS OF GENERATIVE CONSTRUCTION
PROCEDE D'OBTENTION D'UN OBJET EN TROIS DIMENSIONS PAR FABRICATION ADDITIVE

(30) Priorität: 26.02.2013 DE 102013003167
(43) Veröffentlichungstag der Anmeldung: 06.01.2016
(73) Patentinhaber: Arburg GmbH + Co KG, 72290 Lossburg (DE)
(72) Erfinder: KRAIBÜHLER, Herbert, 72290 Lossburg (DE); DUFFNER, Eberhard, 72181 Starzach (DE); KESSLING, Oliver, 72290 Lossburg-Lembach (DE)
(74) Vertreter: Reinhardt, Harry
(86) Internationale Anmeldenummer: PCT/EP2014/000460
(87) Internationale Veröffentlichungsnummer: WO 2014/131500

(56) Entgegenhaltungen:
- EP-A1- 1 886 793
- EP-A1- 2 266 782
- DE-A1-102011 109 368
- H. BROOKS, A. E. W. RENNIE, T. N. ABRAM, J. McGOVERN, F. CARON: "Variable Fused Deposition Modelling - Concept Design and Tool Path Generation", , Juni 2011 (2011-06), Seiten 1-10, XP002725372, Gefunden im Internet: URL:http://clok.uclan.ac.uk/3864/1/__lha-1 13_pers-I_0006431A_My%20Documents_Research _Papers_Conference%20papers_Variable%20fus ed%20deposition%20modelling%20-%20concept% 20design%20and%20tool%20path%20generation. pdf [gefunden am 2014-06-04]
- Richard Horne: "Slic3r is Nicer - Part 1 - Settings and Extruder Calibration", , 6. Januar 2012 (2012-01-06), Seiten 1-12, XP002725373, Gefunden im Internet: URL:http://richrap.blogspot.de/2012/01/sli c3r-is-nicer-part-1-settings-and.html [gefunden am 2014-06-04]
- Gary Hodgson: "Thoughts on Fill Algorithms", , 3. Januar 2012 (2012-01-03), Seiten 1-6, XP002725374, Gefunden im Internet: URL:http://garyhodgson.com/reprap/2012/01/ thoughts-on-fill-algorithms/ [gefunden am 2014-06-04]
- ALEXANDER PASKO ET AL: "Procedural function-based modelling of volumetric microstructures", GRAPHICAL MODELS, ELSEVIER, SAN DIEGO, CA, US, Bd. 73, Nr. 5, 3. März 2011 (2011-03-03), Seiten 165-181, XP028271873, ISSN: 1524-0703, DOI: 10.1016/J.GMOD.2011.03.001 [gefunden am 2011-03-11]

## Beschreibung

Die Erfindung betrifft ein Verfahren zur Herstellung eines dreidimensionalen Gegenstandes durch generativen Aufbau aus wenigstens einem verfestigbaren Material nach dem Oberbegriff des Anspruches 1.

Im Rahmen dieser Anmeldung wird der Begriff "Raumstruktur" in dem Sinne verwendet, dass er Strukturen innerhalb eines räumlich begrenzten Bereichs eines Gegenstands beschreibt, die durch bestimmte Maßnahmen beeinflussbar sind. Dies wird am besten deutlich anhand eines Beispiels, wie es in Fig. 4 dargestellt ist. Von dem Gegenstand ist dort ein Quadrat 50 als Schnittfläche durch den Gegenstand zu erkennen, der eine Außenkontur, hier aus einzelnen Tropfen wie ein Punktemuster, sowie eine innere linienartige Füllung aufweist. Sowohl die Außenkontur ist eine Raumstruktur als auch die innere Füllung. Während es bei der Außenkontur zum Beispiel darauf ankommen kann, dass eine gute Oberfläche mit entsprechend geringer Rauheit oder guter Optik der Außenhaut gewährleistet ist, kommt es im Innenbereich darauf an, möglichst effizient die Fläche zu füllen. Die Raumstruktur lässt sich dadurch gestalten, dass eine Veränderung zum Beispiel der Art der Ausbringung bewirkt wird, indem zum Beispiel im Außenbereich kleinste Tröpfchen aneinander gesetzt werden, während im Innenbereich mit größeren Tropfen und/oder einem kontinuierlichen Strang ein Austrag des Materials erfolgt.

Aus der WO 2013/017278 A1 ist ein derartiges Verfahren zur Herstellung eines dreidimensionalen Gegenstandes aus einem verfestigbaren Material wie üblichen Kunststoffen bekannt, das analog zum Spritzgießen über eine Plastifiziereinheit verflüssigt wird und dann tropfenweise ausgetragen wird (siehe auch EP 1 886 793 A1). Die Tropfen können so benachbart aneinander gefügt werden, dass sich eine Verbindung oder Grenzbereiche einstellen, in denen benachbarte Materialien aneinander liegen. Dabei wird kein Einfluss darauf genommen, wie die Raumstruktur der einzelnen Materialien ausgestaltet wird. Aus der DE 10 2011 109 369 A1 ist es bekannt, bei diesem Verfahren Strukturen durch die Einbettung von Faserelementen zu verstärken.

Aus den im Internet zugänglichen Veröffentlichungen
H. BROOKS, A. E. W. RENNIE, T.N. ABRAM, J. McGOVERN, F. CARON: "Variable Fused Deposition Modelling - Concept Design and Tool Path Generation", Juni 2011 (2011-06), Seiten 1 -10, XP002725372,
   Gefunden im Internet:
   URL: http://clok.uclan.ac.uk/386411/__lha-113_pers-I_0006431A_My%20Documents_Research_Papers_Conference%20papers_Variabl e%20fused%20deposition%20modelling%20-%20concept%20design%20and%20tool%20path%20generation.pdf
   [gefunden am 2014-06-04] sowie aus
Richard Horne: "Slic3r is Nicer - Part 1 - Settings and Extruder Calibration", 6. Januar 2012 (2012-01-06), Seiten 1-12, XP002725373, Gefunden im Internet: URL: http://richrap.blogspot.de/2012/01/slic3r-is-nicer-part-1-settings-and. html
   [gefunden am 2014-06-04] und aus
Gary Hodgson: "Thoughts on Fill Algorithms", 3. Januar 2012 (2012-01-03), Seiten 1-6, XF002725374, Gefunden im Internet: URL: http://garyhodgson.com/reprap/2012/01/thoughts-on-fill-algorithms/ [gefunden am 201 4-06-04]
sind für den Fachmann beim 3D-Druck Auswahlmöglichkeiten zur Füllmustergenerierung und Steuerung einer Austragseinheit an sich bekannt, jedoch nicht innerhalb einer Raumstruktur eine Materialkomponente tropfenweise zur Erzeugung einer homogenen und/oder dichtesten Kugelpackung auszubringen. Es geht nämlich dort um rein mathematische Probleme und nicht um konkrete Lösungsansätze für das gezielte dichte Packen bei der Erstellung von Strukturen im Inneren und Äußeren eines Gegenstandes.

Ein Verfahren, das dem Rapid Prototyping zuzuordnen ist, ist aus der WO 2009/013751 A2 bekannt. Unter dem Oberbegriff "solid freeform fabrication" werden dort, Absätze (0003) und (0004) Methoden zur Herstellung unmittelbar aus Computerdaten erfasst, die zum Beispiel ein dreidimensionales Drucken, ein Elektronenstrahlschmelzen, Stereolithographie, selektives Lasersintem, laminierte Objektherstellung und FDM-Verfahren, also grundsätzlich Verfahren umfassen, bei denen allenfalls ein geringer Druck beim Ausbringen des Materials aufgebracht wird. Bei diesen Verfahren ist es gemäß der dortigen Fig. 8 möglich, benachbarte Strukturen aus verschiedenen Materialien herzustellen. Das Ausbringen erfolgt allerdings nicht dadurch, dass Tropfen an Tropfen oder Tropfen an Strang aneinander gefügt werden, sondern dadurch, dass feste Materialien ausgebracht und anschließend nachbehandelt oder unter zusätzlicher Energiezufuhr ausgehärtet werden (Absatz (0005). Dies führt zu einem bei verschiedenen Materialien auch ungleichmäßigen Schrumpfen des Gegenstands, so dass die ausgebrachte Geometrie weder im Innern noch an den Außenabmessungen der ausgehärteten Geometrie entspricht. Gestaltungskriterien zur Bestimmung der jeweils gewünschten Raumstruktur bestehen nicht, wären aber auch unter diesen Bedingungen schwer einzuhalten.

Aus der EP 1 442 869 A1 ist es bekannt, einen Datensatz eines herzustellenden Gegenstands in einzelne Zellen zu zerlegen und diese Strukturelemente von Zelle zu Zelle unterschiedlich bei der Erstellung des Gegenstands zu behandeln.

In der Kunststoffteileherstellung sind derartige qualitativ hochwertige Teile durch Spritzgusse oder Extrudieren in großen Losgrößen gut herzustellen. Der Vorteil insbesondere des Spritzgießens beruht nämlich genau darauf, dass eine hochgenaue Herstellung von komplexen Teilgeometrien möglich ist. Wenn es allerdings darum geht, Teile in kleineren Stückzahlen also zum Beispiel in der Stückzahl 1 oder kleine Losgrößen, wie zum Beispiel Musterteile mit der Anforderung einer kurzfristigen Bereitstellung sowie Eigenschaften herzustellen, die denen von spritzgegossenen Teilen ähnlich sind, werden andere Fertigungsverfahren verwendet, die weitläufig unter dem Begriff Prototyping und Rapid Manufacturing bekannt sind. Die Herstellung solcher Teile beruht werkzeuglos, das heißt ohne Formwerkzeuge, in den meisten Fällen auf der Erzeugung der Geometrie aus 3D-Daten. Die bisherigen Verfahren erlauben jedoch wie ein Aufschmelzen von Pulverschichten durch Wärmeeintrag zum Beispiel mittels Laser, oder Druckverfahren in unterschiedlicher Bindungsform der Pulverteile keine individuelle Herstellung oder Beeinflussung der Raumstruktur.

Ausgehend von diesem Stand der Technik liegt der vorliegenden Erfindung die Aufgabe zugrunde, ein Verfahren zur Herstellung eines dreidimensionalen Gegenstandes zur Verfügung zu stellen, mit dem das Ausbringen des Materials nach individuellen Anforderungen an den Gegenstand erfolgen kann.

Diese Aufgabe wird durch ein Verfahren mit den Merkmalen des Anspruches 1 gelöst.

Zur Herstellung des Gegenstands werden am Gegenstand strukturell unterschiedliche Bereiche definiert, für die das Material programmierbar zur Ausgestaltung selektierter Raumstrukturen ausgetragen wird. Durch diese Programmierung kann Einfluss genommen werden auf die Art des Materialaustrags zur freien Generierung der 3D-Geometrie, sodass der jeweils gewünschten Eigenschaft in der betroffenen Raumstruktur Genüge getan werden kann. Im Gegensatz zum Kunststoffspritzgießen kann so auf das Fließverhalten des Materials beim Ausbilden des Raumes bzw. der Raumstruktur unmittelbar Einfluss genommen werden. Während beim Kunststoff-Spritzgießen das Fließverhalten aus rheologischen Gründen zwangsweise vorgegeben ist, kann hier auf die Verteilung des Materials Einfluss genommen werden, sodass Tropfen unterschiedlicher Größe oder auch andere Strukturen wie Stränge in Folge bedarfsweise auch wechselnd ausgetragen werden können. Je nach Tropfengröße oder auch Dauer der Austragung ergeben sich damit unterschiedliche Strukturen, die am Gegenstand einen bestimmten Raum einnehmen und eine Raumstruktur gestalten. Dadurch können dann umgekehrt über Einflussfaktoren, die auf diesen Materialaustrag Einfluss nehmen, die Raumstruktur und damit die geometrischen und/oder mechanischen Eigenschaften des Gegenstandes lokal abschnittsweise beeinflusst werden.

Das Material wird unmittelbar aus einem unter Druck stehenden bzw. setzbaren Materialspeicher vorzugsweise tropfenweise ausgetragen. Der Druck liegt dabei in einer Höhe, wie er aus der Spritzgießtechnik von Kunststoffen bekannt ist, d.h. bei mindestens 10 MPa bis 100 MPa. Diese Tropfen bilden zugleich die endgültige Geometrie, und zwar vorzugsweise auch bereits im Innern des Gegenstands, also an Stellen, die nach Herstellung des Gegenstands mit diesem Verfahren nicht mehr zu erreichen sind und damit auch einer Nachbehandlung entzogen wären. Da die finale Geometrie aber bereits beim Austragen entsteht, ist dies auch nicht erforderlich. Gerade der Druck unterstützt diesen Effekt, da das Material ähnlich wie beim Spritzgießen aneinander gefügt wird, nur dass dort der Druck im Formhohlraum innerhalb des Formwerkzeugs erhalten wird. Dieses Aneinanderfügen in formschlüssiger Weise ist vermutlich eine Folge des Materialaustrags unter Druck und einen gleichzeitigen Zusammenfließen der Tropfen am Aufbringungsort am herzustellenden Gegenstand.

Die Verwendung einer an sich bekannten Plastifiziereinheit wie sie beim Spritzgießen von Kunstsoffen verwendet wird, bringt den Vorteil mit sich, dass auch aus der Spritzgießtechnik bekannte Standardmaterialien verarbeitet werden können, die günstig und leicht an jedem Ort der Welt erhältlich sind.

Je nach den Anforderungen an das Bauteil werden innerhalb der Raumstruktur homogene und/oder dichteste Kugelpackungen erzeugt. Mit dieser Strategie kann insbesondere auf die Rauheit und Optik der Außenhaut oder die Baugeschwindigkeit beim Füllen von innenliegenden Volumen Einfluss genommen werden oder auch gezielt eine Porosität wie zum Beispiel bei einem Filter erzeugt werden.

Vorzugsweise wird nur ein einziges Material mit einer oder mehreren Austragseinheiten ausgebracht. Es ist allerdings möglich, auch mehrere Materialien mit mehreren Austragseinheiten zu verwenden. In allen Fällen kann über die Gestaltungskriterien auf die Art der Ausbringung, die Größe und Menge des auszubringenden Materials oder auch die Dauer der Ausbringung Einfluss genommen werden. Ebenso können aber auch mehrere Austragseinheiten gleichzeitig oder seriell betrieben werden, die sich zum Beispiel dadurch unterscheiden, dass sie entweder nach verschiedenen Gestaltungskriterien angesteuert werden und/oder unterschiedliche geometrische Verhältnisse im Bereich der Austrittsöffnung aufweisen oder, wie gesagt, verschiedene Materialien ausbringen.

Vorzugsweise umfassen die Gestaltungskriterien Einflussgrößen für den Materialaustrag, die die Menge des auszubringenden Materials zum Beispiel nach ihrer Größe beeinflussen oder auch die Dauer des Ausbringens beeinflussen, sodass nur Tröpfchen z.B. in verschiedenen Größen oder nur ein kontinuierlicher Faden ausgetragen werden oder abwechselnd zwischen diesen Austragsarten gewechselt wird. Einflussgrößen als Gestaltungskriterien sind zum Beispiel der Druck auf die Materialkomponente, die Öffnungs- und Schließzeit einer taktbaren Austrittsöffnung, die Temperatur des Materials, der Durchmesser der Austrittsöffnung, der Öffnungshub des Verschlussmechanismus der Austrittsöffnung oder das Verhältnis zwischen dem Weg des Fördermittels zur auszubringenden Menge.

Je nach den weiteren Anforderungen an das Bauteil können innerhalb der Raumstruktur auch Gitter- und Siebstrukturen erzeugt werden oder, um zum Beispiel den Verzug oder die Festigkeit eines Gegenstandes zu beeinflussen, kann von Schicht zu Schicht wechselnd ein Winkelversatz erfolgen, um ein bestimmtes Füllmuster zu erzeugen. Mit dieser Strategie kann insbesondere auf die Rauheit und Optik der Außenhaut, die Baugeschwindigkeit beim Füllen von innenliegenden Volumen, die technische Qualität wie zum Beispiel den Verzug oder die Festigkeit Einfluss genommen werden oder auch gezielt eine Porosität wie zum Beispiel bei einem Filter erzeugt werden.

Weitere Vorteile ergeben sich aus den Unteransprüchen und der nachfolgenden Beschreibung bevorzugter Ausführungsbeispiele.

Im Folgenden wird die Erfindung anhand eines Ausführungsbeispiels näher erläutert. Es zeigen:

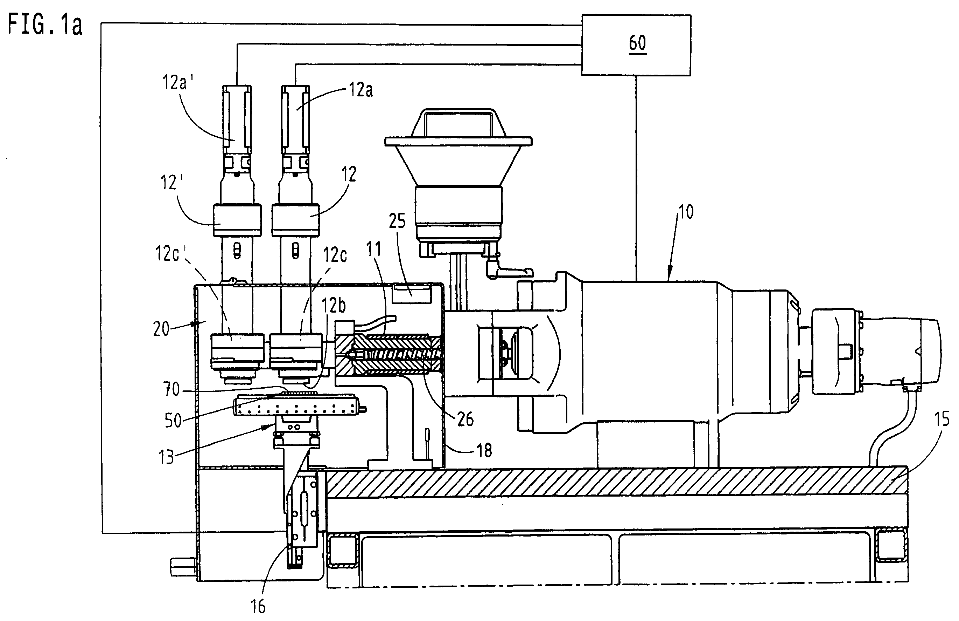

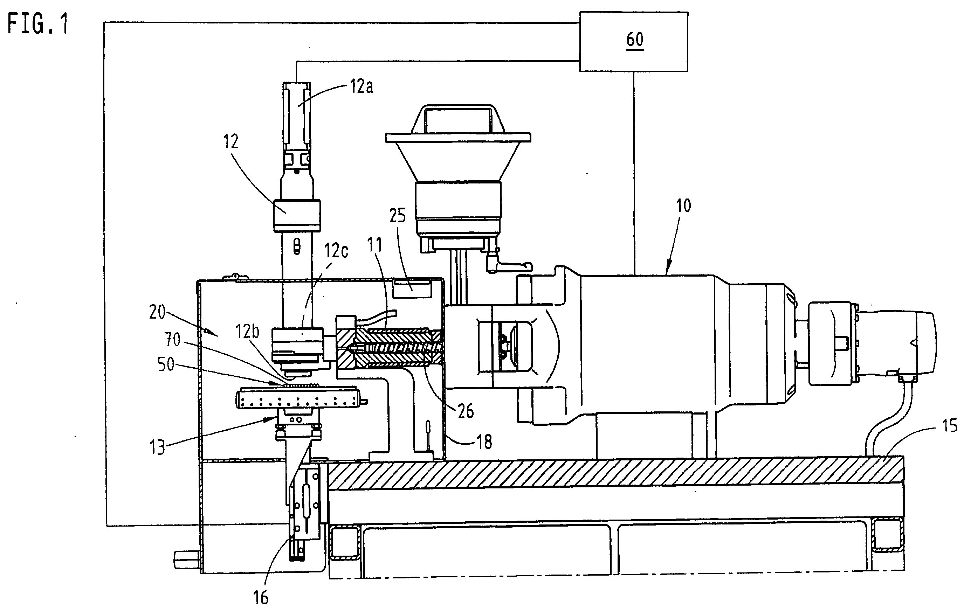

- Fig. 1: eine teilweise geschnittene seitliche Ansicht einer Vorrichtung zur Herstellung eines dreidimensionalen Gegenstandes,
- Fig. 1 a: eine Darstellung gemäß Fig. 1 mit mehreren Austragseinheiten,
- Fig. 2a, 2b: eine Darstellung von Tropfen in zwei aufeinander folgenden Schichten mit und ohne Versatz,
- Fig. 2c: die Füllung einer Raumstruktur durch eine Gitterstruktur,
- Fig. 2d: die Füllung eines quadratischen Gegenstands mit Außenkontur,
- Fig. 2e: die Füllung einer Fläche mit unterschiedlichen Tropfendurchmessem,
- Fig. 2f, 2g: die Füllung einer Raumstruktur mit Tropfen bzw. Fäden,
- Fig. 2h - 2j: die Ausgestaltung weiterer Raumstrukturen.

Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

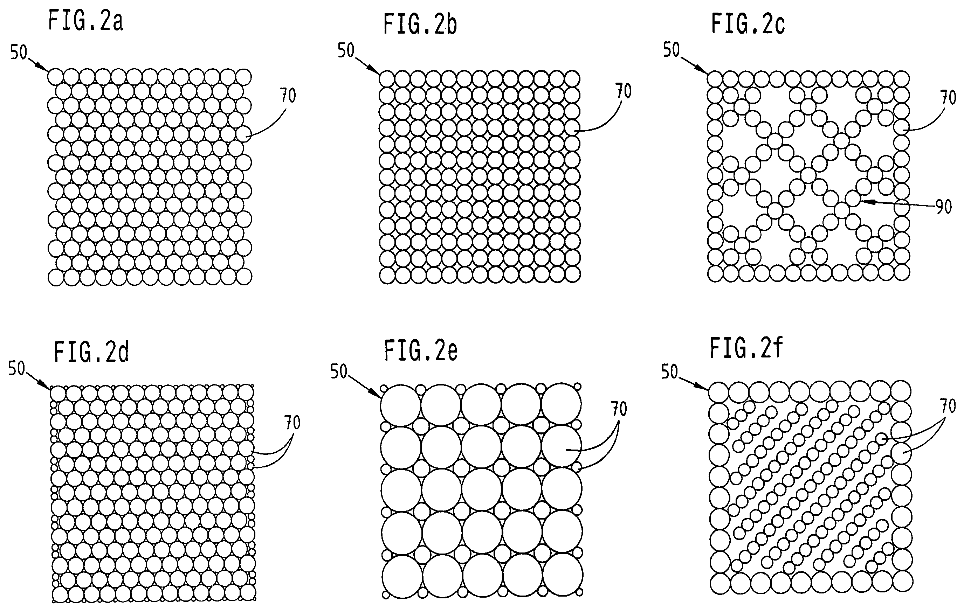

Bevor auf den Verfahrensablauf und die so herzustellenden Gegenstände 50 gemäß den Figuren 2a bis 2j eingegangen wird, wird zunächst eine Vorrichtung zur Herstellung eines dreidimensionalen Gegenstandes durch generativen Aufbau unter direkter Aufbaufolge aus wenigstens einem verfestigbaren Material gemäß Fig. 1 erläutert. Das Material, das zur Verarbeitung verflüssigt wird und das nach Ausbringen aus einer Austragseinheit 12 aushärtet, dient der Herstellung eines dreidimensionalen Gegenstandes. Dazu können Tropfen 70 oder auch Stränge 80 oder Fäden je nach Beeinflussung der Vorrichtung ausgetragen werden. Der Gegenstand kann zum Beispiel dadurch hergestellt werden, dass gemäß Fig.1 Tropfen 70 sequentiell aus einer Austrittsöffnung 12b einer Austragseinheit 12 ausgetragen werden, sodass sich Schicht für Schicht der Gegenstand 50 auf einem durch eine Antriebseinheit 16 relativ zur Austrittsöffnung 12b beweglichen Objektträger 13 im Bauraum 20 ergibt. Ergänzend zur Austragseinheit 12 kann gemäß Fig. 1 a auch eine weitere Austragseinheit 12' mit zugehörigem Antriebsteil 12a' und Materialspeicher 12c' vorgesehen sein.

Da die Art des Materials und dessen Verarbeitung für das Ergebnis des Verfahrens, also für die Qualität des hergestellten Gegenstandes, wesentlich sind, wird hierauf detailliert eingegangen. Das verfestigbare Material ist ein plastifiziertes Material, wie zum Beispiel Silikon oder ein plastifizierbares Material wie Thermoplaste oder auch pulverförmige Materialien. Das Material kann auch ein unter Wärme reversibel aufschmelzbares und damit recyclebares Material sein. Beliebige andere Materialien können verwendet werden, sofern diese Materialien durch die Vorrichtung plastifizierbar und vor allem durch die wenigstens eine Austragseinheit 12 austragbar sind. Als Material kommen dabei übliche beim Kunststoffspritzgießen verwendete Materialien in Betracht, das heißt, es muss nicht auf teure Sondermaterialien zurückgegriffen werden. Die Verwendung einer an sich bekannten Plastifizier- bzw. Spritzgießeinheit, wie sie beim Spritzgießen von Kunstsoffen verwendet wird, zur Aufbereitung des verfestigbaren Materials in eine fluide Phase, bringt den Vorteil mit sich, dass auch aus der Spritzgießtechnik bekannte Standardmaterialien verarbeitet werden können, die günstig und leicht an jedem Ort der Welt erhältlich sind.

Das verfestigbare Material weist in der fluiden Phase einen sogenannten laminaren Quellfluss auf. In den Quelffluss geht u.a. die Anlagerung der Schmelze an der Wandung ein. Dies wird am deutlichsten bei einem Blick in die Erkenntnisse der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht eine besondere Strömungssituation, der "Quellfluss", da die Stromlinien in diesem Bereich wie eine Quelle erscheinen, wenn man sie in Bezug auf ein mitbewegtes Koordinatensystem betrachtet. Zwischen zwei den Kavitätsoberflächen nahe liegenden, rasch erstarrten Masseschichten fließt die Schmelze, wobei sie in der Mitte der Kavität mit größeren Geschwindigkeiten zur Fließfront hin schreitet. Kurz bevor die Schmelze die Fließfront erreicht, reduziert sich ihre Geschwindigkeitskomponente in Fließrichtung, sie fließt schräg zur Wand, bis sie sich an die Wand anlegt.

Der laminare Quellfluss ist für die Erzeugung von auf den Objektträger 14, ausgerichteten' Tropfen 15 auf Grund seiner laminaren Ausbildung einerseits von Vorteil, andererseits bestehen vor allem bei der Ausbildung kleiner Tropfen genau hier auch die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschten kleinen Volumen, vorzugsweise im Bereich kleiner gleich 1 mm³, besonders bevorzugt im Bereich von 0,01 bis 0,5 mm³ und gewünschter Fluggeschwindigkeit ausbilden lassen, andererseits ist eine entsprechend hohe Viskosität des Materials gerade für die Ausbildung einer geeigneten Tropfenform eines diskontinuierlichen Tropfens von Bedeutung.

Dies unterscheidet die verwendeten Materialien auch von den vorbekannten Wachsen. Aufgrund ihrer Viskosität lassen sich Wachse im normalen Thermodruck- oder Inkjetverfahren ausbringen, also durch reines kinematisches, druckloses Beschleunigen ohne Druckdifferenz des aufgeschmolzenen Tropfens. Die hier verwendeten Materialien unterscheiden sich hiervon bereits dadurch, dass ihre Viskositätszahl um eine bis mehrere Zehnerpotenzen höher ist. So liegt die dynamische Viskositätszahl des verfestigbaren Materials zwischen 100 und 10000 [Pa s], wobei vorzugsweise das verfestigbare Material ein in der Spritzgießtechnik üblicher Kunststoff oder ein Harz ist. Dies macht die Verarbeitung aus einem unter Druck setzbaren Materialspeicher 12 erforderlich, da Drücke von mehr als 10 bis 100 MPa (100 bis 1000 bar) ohne weiteres erforderlich sind, insbesondere wenn zur Erzielung kleiner Tropfenvolumen kleine Austragsöffnungen 20 eingesetzt werden.

In der Praxis zeigt sich aber, dass genau diese Vorgehensweise und der Druck dazu beitragen, dass sich bei der Herstellung von dreidimensionalen Gegenständen Ergebnisse einstellen, die bisher nicht zu erreichen waren. Das Material wird unmittelbar aus dem unter dem genannten Druck stehenden bzw. setzbaren Materialspeicher 12c' vorzugsweise tropfenweise ausgetragen. Diese Tropfen bilden zugleich die endgültige Geometrie, und zwar auch bereits im Innern des Gegenstands 50, also an Stellen, die nach Herstellung des Gegenstands mit diesem Verfahren nicht mehr zu erreichen sind und damit auch einer Nachbehandlung entzogen wären. Da die finale Geometrie aber bereits beim Austragen entsteht, ist dies auch nicht erforderlich.

Gerade der Druck unterstützt den Aufbau der finalen Geometrie, da das Material ähnlich wie beim Spritzgießen aneinander gefügt wird, nur dass dort der Druck im Formhohlraum innerhalb des Formwerkzeugs erhalten wird. Dieses Aneinanderfügen in formschlüssiger Weise ist vermutlich eine Folge des Materialaustrags unter Druck und einen gleichzeitigen Zusammenfließen der Tropfen am Aufbringungsort am herzustellenden Gegenstand.

Dieses Material wird in der auf einem Maschinentisch 15 angeordneten Aufbereitungseinheit 11 plastifiziert bzw. aufbereitet und durch die Druckerzeugungseinheit 10 unter Druck gesetzt. Der Druck bestimmt wie Massetemperatur, Taktzeit oder Taktbewegung der Austrittsöffnung 12b die Ausbildung und Größe der Tropfen und damit auch die Qualität des herzustellenden Gegenstandes. Das gewünschte Volumen des Tropfens 70 liegt insbesondere im Bereich von 0,01 bis 1 mm³. Der Durchmesser der Austrittsöffnung 12b ist insbesondere ≤ 1 mm, vorzugsweise etwa 0,1 mm. Bei einem Tropfendurchmesser von 100 µm beträgt das Tropfenvolumen etwa 0,0005 mm³.

Innerhalb der Austragseinheit 12 befindet sich ein Materialspeicher 12c, aus dem das Material als Materialkomponente A über eine Austrittsöffnung 12b betätigt durch ein Antriebsteil 12a in Richtung auf den Gegenstand 50 ausgetragen wird. Im Folgenden wird die Erfindung an Hand der bevorzugten Ausführungsform beschrieben, bei der nur eine Materialkomponente ausgetragen wird. Es ist jedoch möglich auch mehrere Materialkomponenten auszutragen. An der Austrittsöffnung 12b kann als Blende vorzugsweise ein Festkörpergelenk gemäß DE 10 2009 030 099 B1 verwendet werden.

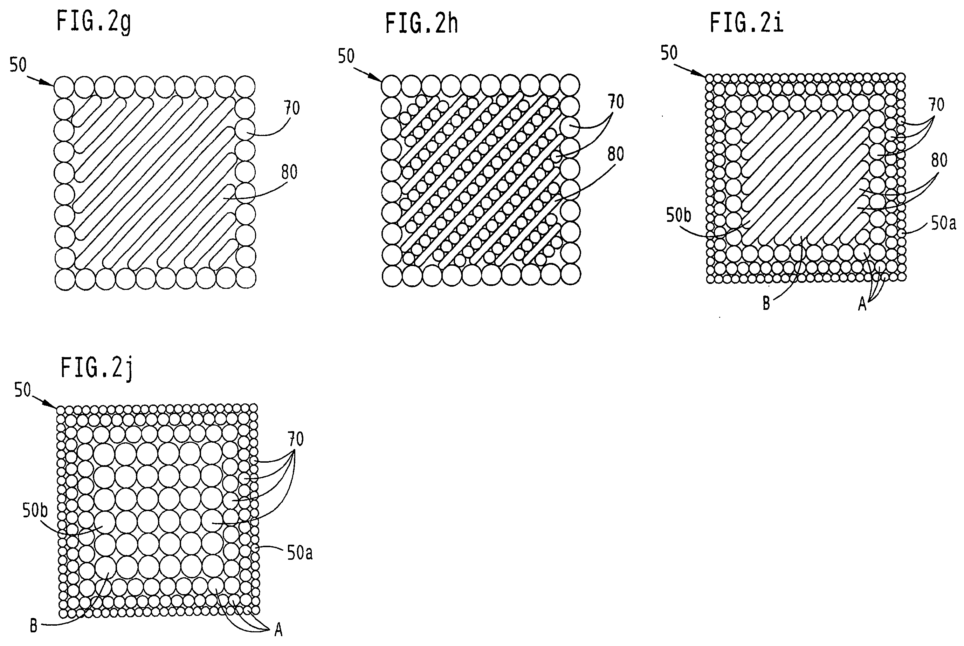

Verfahrensgemäß wird der dreidimensionale Gegenstand durch das entsprechend verflüssigte Material hergestellt, das nach Ausbringen aus der Austragseinheit 12 am Objektträger 13 bzw. am Gegenstand 50 aushärtet und dadurch Stück für Stück den Gegenstand 50 aufbaut. Materialkomponente A (Fig. 2j) wird in der direkten Aufbaufolge über eine Steuereinrichtung 60 programmierbar ausgetragen. Dabei wird das Material bereits durch das unter Druck erfolgende Austragen so aneinander gefügt, dass sich strukturell unterschiedliche Bereiche des Gegenstands 50 erzeugen lassen. Die beim Ausbringen des Materials erhaltenen geometrischen Verhältnisse entsprechen bereits dem endgültigen Gegenstand 50, und zwar im Außen wie im Innern. Die physische Struktur wird also unmittelbar erhalten, was auch insofern von Bedeutung ist, als nach Fertigstellung des Gegenstands ein Zugang zu inneren Raumstrukturen nicht mehr gegeben ist. Stütz- oder Siebstrukturen, Gewicht sparende innere Gestaltungen lassen sich auf diesem Wege dennoch optimieren, da der Gestalter die finale Anordnung dieser Elemente schon bei der Erstellung der Daten für den Gegenstand gezielt berücksichtigen kann. Dadurch lassen sich Eigenschaften wie z.B. Biegeeigenschaften oder Diffusionsfähigkeit abschnittsweise, von Raumstruktur zu Raumstruktur unterschiedlich, planen, dimensionieren und herstellen.

Gestaltungskriterien zur Ausgestaltung der Raumstruktur werden der Steuereinrichtung 60 für die strukturell unterschiedlichen Bereiche des Gegenstandes 50 vorgegeben. Anhand dieser Gestaltungskriterien wird die Austragseinheit 12 beim Ausbringen der wenigstens einen Materialkomponente A für die Herstellung von strukturell unterschiedlichen Bereichen des Gegenstandes 50 von der Steuereinrichtung 60 anhand dieser Gestaltungskriterien zur Gestaltung einer für den jeweiligen Bereich des Gegenstands gewünschten und damit von Bereich zu Bereich des Gegenstandes gegebenenfalls verschiedenen Raumstruktur gesteuert. Die Steuereinrichtung hat damit gemäß Fig. 1 insbesondere Einfluss auf die Materialaufbereitung durch die Aufbereitungseinheit 10, die Austragseinheit 12 und auch auf den Objektträger 13, der den Gegenstand gegenüber der Austragseinheit 12 positioniert und bewegt. Die verschiedenen Bereiche des Gegenstands 50 können aus ein und derselben Materialkomponente A, aber ebenso auch aus mehreren Materialkomponenten erzeugt werden.

Die Gestaltungskriterien umfassen insbesondere die Menge der auszubringenden Materialkomponente, um zum Beispiel die Größe der Tropfen zu beeinflussen oder auch ein kontinuierlichen Strang oder Faden zu erzeugen. Gleichzeitig oder alternativ kann auch die Dauer des Ausbringens als Gestaltungskriterium herangezogen werden und das Material beeinflussen. Weitere Einflussgrößen, die als Gestaltungskriterium für die Ausgestaltung der Raumkriterien herangezogen werden können und die Materialkomponente beeinflussen, sind insbesondere
- der Druck auf die Materialkomponente im Materialspeicher 12c innerhalb der Austragseinheit, da bei größerem Druck größere Tropfen erzeugt werden können,
- Öffnungszeit und Schließzeit der taktbaren Austrittsöffnung 12b der Austragseinheit 12, da bei einer längeren Öffnungszeit sich ebenfalls größere Tropfen 70 ergeben,
- die Temperatur der auszubringenden Materiakomponente, weil damit auf die Viskosität und damit die Fließfähigkeit des Materials Einfluss genommen werden kann, sodass sich bei größerer Fließfähigkeit auch Materialfäden ausbringen lassen,
- der Öffnungshub eines Antriebsteils 12a für den Verschlussmechanismus der taktbaren Austrittsöffnung 12b, da bei größerem Hub auch die Größe der Tropfen 70 oder Menge an auszubringenden Material steigt,
- das Verhältnis des Wegs eines Fördermittels 26, wie der in Fig. 1 dargestellten Schnecke, zur auszubringenden Menge, da sich hieraus eine Kennzahl ermitteln lässt, die Einfluss auf Größe und Regelmäßigkeit der Tropfen hat,
- die Kontinuität der Ausbringung, da durch Unterbrechung gezielt Lücken gesetzt werden können oder bei kontinuierlicher Öffnung Stränge 80 ausgebracht werden.

Auf Seiten der Vorrichtung kann auch an verschiedenen Austragseinheiten 12, 12' ein unterschiedlicher Durchmesser der Austrittsöffnung als Gestaltungskriterium verwendet werden, so dass sich je nach Ansteuerung der einen oder der anderen Austragseinheit ebenfalls Tropfengröße oder Strangdicke ändern. Zu den Gestaltungskriterien gehören aber auch die Qualitätsanforderungen an den Gegenstand wie Rauheit, Dichte, Oberflächenqualität, Gewicht oder die Geometrie der Raumstruktur, da zum Beispiel gemäß Fig. 2a aufeinanderfolgende Schichten so gegenüber einem Ausbringen ohne Versatz gemäß Fig. 2b zueinander versetzt werden können, dass sie auf Lücke ausgebracht werden oder auch mit einem Winkelversatz von zum Beispiel 90 Grad ausgebracht werden, um den Zug und die Festigkeit des Bauteils insbesondere im Innern, das heißt beim Füllen mit einer Raumstruktur zu beeinflussen. Gezielt kann als ein die Qualität des Gegenstands beeinflussendes Gestaltungskriterium die Raumstruktur dahingehend beeinflusst werden, dass Lücken - wenn überhaupt - im Bauteil und nicht "konturnah" entstehen (z.B. Fig. 2j). Dies ist vor allem für feingliedrige Bauteile mit spitzen Winkeln interessant, um z.B. späteren Schwächungen des Gegenstands vorzubeugen.

Bedarfsweise können gemäß Fig. 1a eine oder mehrere Materialkomponenten A, B (Fig. 2j) aus mehreren Austragseinheiten 12, 12' ausgebracht werden, also auch mehr als nur eine Materialkomponente. Diese können dann jeweils für sich ganz unterschiedlich von der Steuereinrichtung 60 angesteuert werden, je nachdem welche Gestaltungskriterien angewandt werden. Ergänzend oder alternativ können unterschiedliche geometrische Verhältnisse insbesondere im Bereich der Austrittsöffnung 12b der jeweiligen Austragseinheit 12, 12' angewandt werden, um dadurch die Art der Ausbringung zu beeinflussen.

Selbstverständlich kann durch den Einsatz von zum Beispiel zwei Austragseinheiten 12 auch ein sogenannter Sandwichaufbau realisiert werden, ähnlich wie man ihn aus der Spritzgusstechnik kennt, um zum Beispiel hochwertiges Material im Außenbereich und günstigeres Material im Innenbereich, also in der inneren Raumstruktur einzusetzen oder um zum Beispiel unterschiedliche Eigenschaften von Barriereschichten zu erzeugen. Das Austragen kann dann im Wechsel der beiden Austragseinheiten oder je nach Raumstruktur auch gleichzeitig erfolgen. Für die Ausgestaltung einer Raumstruktur insbesondere zum Füllen von Körpern kann gemäß Fig. 1 die wenigstens eine Materialkomponente tropfenweise zur Erzeugung einer homogenen und/oder dichtesten Kugelpackung gemäß Fig. 2a, 2b ausgebracht werden. Die Tropfen 70 sind dabei in aufeinanderfolgenden Schichten zum Beispiel zueinander versetzt. Ferner ist in Fig. 2d angedeutet, dass ein kleinerer etwa 50% so großer Tropfen auch eine Lücke füllen kann.

Gemäß Fig. 2c kann innerhalb der Raumstruktur die wenigstens eine Materialkomponente A zur Erzeugung einer Gitterstruktur 90 ausgebracht werden. Dadurch lassen sich die Fülldichte und damit das Gewicht eines Gegenstands 50 minimieren. Als spezielle Ausführungsform ist zum Beispiel auch eine Wabenstruktur denkbar und ebenso ist es möglich, die Porosität in diesem Bereich zu erhöhen und damit eine Siebstruktur herzustellen. Damit lässt sich ein Gegenstand 50 effizient, ohne Qualitätseinbußen hinsichtlich der gewünschten Bauteileigenschaften herstellen.

Fig. 2i zeigt die beispielhafte Füllung eines quadratischen Gegenstands 50 mit einer äußeren Raumstruktur 50a und einer inneren Raumstruktur 50b. Vorzugsweise werden zunächst in einer Ebene die Außenkonturen der äußeren Raumstruktur 50b punkt- bzw. tropfenweise erzeugt, wobei auf eine entsprechend glatte Oberfläche hin gearbeitet wird, das heißt, es werden möglichst kleine Tropfen ausgebracht. In der Praxis zeigt sich allerdings schon eine Verbesserung der Oberflächenqualität auch bei gleichgroßen Tropfen. Diese Verbesserung der Oberflächenqualität wird durch den definierten Austrag der Kontur erzielt. Danach wird die Füllung derselben Ebene oder Schicht unter einem Winkel von z.B. 45 Grad innerhalb der inneren Raumstruktur 50b durch Stränge 80 oder Fäden eingebracht. Dieser Winkel kann von Schicht zu Schicht bzw. Ebene zum Beispiel um 90 Grad versetzt werden, um dadurch eine Verzugsfestigkeit des Gegenstands zu erreichen. Mit anderen Worten erfolgt beispielhaft eine Schichtzerlegung der Box gemäß Fig. 2i. Unterschieden wird dabei zwischen der Kontur (äußere Raumstruktur 50a) und der eigentlichen Füllung (innere Raumstruktur 50b). Die Herstellungsabfolge der Ebene kann beliebig gewählt werden, das heißt, es kann zuerst die Außenkontur und dann die Füllung erstellt werden, oder ebenso kann zuerst die Füllung und dann die Außenkontur erstellt werden. Denkbar ist es ebenso, die Außenkontur mehrfach abzufahren oder auch die Reihenfolge beim Abfahren der Außenkontur zu wechseln. Vorzugsweise erfolgt ein Versatz des Füllmusters, um einen spezifizierten Winkel von Schicht zu Schicht. Fig. 2j zeigt die gleiche Struktur, wobei im Inneren die Stränge der Fig. 2i durch größere Tropfen 70 ersetzt sind.

Durch Beeinflussung der Gestaltungskriterien lässt sich auch ein Aufbau gemäß Fig. 2e erreichen, bei dem innerhalb einer Raumstruktur Tropfen 70 unterschiedlicher Größe so angeordnet werden, dass sich eine optimale Füllung ergibt.

Grundsätzlich kann durch Beeinflussung der Gestaltungskriterien erreicht werden, dass nur Tropfen 70 oder ein Strang 80 oder beide alternierend ausgetragen werden. Je nach Wunsch lassen sich damit innerhalb der Raumstruktur Ausgestaltungen gemäß Fig. 2f, 2g oder 2h erreichen.

Werden mehrere Materialkomponenten A, B insbesondere bei Verwendung mehrerer Austragseinheiten 12, 12' wie in Fig. 2j eingesetzt, kann zum Beispiel durch ein Material, welches im Nachhinein durch Auswaschen mittels einer geeigneten Lösung entfernt wird, eine Füllung erreicht werden und es können so Strukturen mit Überhängen hergestellt werden. Ebenso ist es möglich ein Material zur Füllung zu verwenden, welches im Nachhinein herausgebrochen werden kann. Dabei lassen sich durch Anwendung geeigneter Gestaltungskriterien die Geometrien so beeinflussen, dass eine spezielle Füllstrategie sich für die verschiedenen Materialien ergibt, sodass möglichst wenig Material als Stützmaterial für Überhänge erforderlich ist.

Als Gestaltungskriterium wird auch eine Betrachtung von potentiellen Lücken berücksichtigt, welche vor allem bei der Füllung einer Raumstruktur entstehen können. Zur Verbesserung der Oberflächenqualität wird dabei sichergestellt, dass Lücken - wenn überhaupt - im Bauteil und nicht "konturnah" entstehen.

### Bezugszeichenliste

- 10: Druckerzeugungseinheit
- 11: Aufbereitungseinheit
- 12, 12': Austragseinheit
- 12a, 12a': Antriebsteil
- 12b: Austrittsöffnung
- 12c, 12c': Materialspeicher
- 13: Objektträger
- 15: Maschinentisch
- 16: Antriebseinheit
- 20: Bauraum
- 26: Fördermittel
- 50a: äußere Raumstruktur
- 50b: innere Raumstruktur
- 60: Steuereinrichtung
- 70: Tropfen
- 80: Strang
- 90: Gitterstruktur
- A, B: Materialkomponenten

## Patentansprüche

1. Verfahren zur Herstellung eines dreidimensionalen Gegenstandes (50) durch generativen Aufbau in direkter Aufbaufolge aus wenigstens einem verfestigbarem Material, das zur Verarbeitung mittels einer Plastifiziereinheit, wie sie beim Spritzgießen von Kunststoffen verwendet wird, aufbereitet und in eine fluide Phase verflüssigt wird und das nach Ausbringen aus einer Austragseinheit (12) aushärtet,
wobei das verfestigbare Material zum Ausbringen von Tropfen wenigstens einer Materialkomponente im Materialspeicher einem Druck von wenigstens 10 MPa ausgesetzt wird,
wobei die wenigstens eine Materialkomponente (A) in der direkten Aufbaufolge über eine Steuereinrichtung (60) programmierbar unter dem Druck ausgetragen wird, wobei bereits durch das Austragen Teile des Materials aneinandergefügt werden, und die wenigstens eine Materialkomponente strukturell unterschiedliche Bereiche des dreidimensionalen Gegenstandes (50) erzeugt,
wobei beim Austragen der fluiden Phase des verfestigbarem Materials erhaltene geometrische Verhältnisse bereits den finalen geometrischen Verhältnissen des dreidimensionalen Gegenstands (50) entsprechen,
**dadurch gekennzeichnet, dass** der Steuereinrichtung (60) für die strukturell unterschiedlichen Bereiche des Gegenstands (50) an Hand einer Auswahl Gestaltungskriterien vorgegeben werden,
dass die Austragseinheit (12) beim Ausbringen der wenigstens einen Materialkomponente für die unterschiedlichen Bereiche des Gegenstands von der Steuereinrichtung (60) an Hand der ausgewählten Gestaltungskriterien zur Gestaltung einer für den jeweiligen Bereich des Gegenstands gewünschten Raumstruktur gesteuert wird, wobei innerhalb der Raumstruktur die wenigstens eine Materialkomponente tropfenweise zur Erzeugung einer homogenen und/oder dichtesten Kugelpackung ausgebracht wird, und
dass dabei die finalen geometrischen Verhältnisse äußerlich und aber auch im Innern des dreidimensionalen Gegenstandes (50) erhalten werden.

2. Verfahren nach Anspruch 1, **dadurch gekennzeichnet, dass** die Tropfen mit einem Volumen kleiner gleich 1 mm³, besonders bevorzugt im Bereich von 0,01 bis 0,5 mm³ ausgetragen werden.

3. Verfahren nach Anspruch 1 oder 2, **dadurch gekennzeichnet, dass** die finale Geometrie die innere physikalische Struktur des Gegenstands (50) bereits beim Austragen des verfestigbaren Materials bestimmt.

4. Verfahren nach einem der vorhergehenden Ansprüche, **dadurch gekennzeichnet, dass** die verschiedenen Bereiche des Gegenstands (50) aus ein und derselben Materialkomponente (A) erzeugt werden.

5. Verfahren nach einem der vorhergehenden Ansprüche, **dadurch gekennzeichnet, dass** die Gestaltungskriterien die Menge der auszubringenden wenigstens einen Materialkomponente (A) nach ihrer Größe und/oder die Dauer des Ausbringens umfassen.

6. Verfahren nach einem der vorhergehenden Ansprüche, **dadurch gekennzeichnet, dass** die Gestaltungskriterien wenigstens eine der folgenden Einflussgrößen der Materialkomponente oder der Vorrichtung zur Herstellung des Gegenstands (50) umfassen:
- Druck auf die Materialkomponente (A) in einem Materialspeicher (12c),
- Öffnungszeit und Schließzeit einer taktbaren Austrittsöffnung (12b) der Austragseinheit (12),
- Temperatur der auszubringenden Materialkomponente (A),
- Öffnungshub eines Antriebsteils (12a) des Verschlussmechanismus für die taktbare Austrittsöffnung (12b),
- Verhältnis des Wegs eines Fördermittels (26) zur auszubringenden Menge,
- Kontinuität der Ausbringung
- Durchmesser der Austrittsöffnung (12b),

7. Verfahren nach einem der vorhergehenden Ansprüche, **dadurch gekennzeichnet, dass** die Gestaltungskriterien die Geometrie der Raumstruktur und/oder die Qualitätsanforderungen an den Gegenstand (50) umfassen.

8. Verfahren nach einem der vorhergehenden Ansprüche, **dadurch gekennzeichnet, dass** die wenigstens eine Materialkomponente (A, B) aus mehreren Austragseinheiten (12, 12') ausgebracht wird, die von der Steuereinrichtung (60) nach verschiedenen Gestaltungskriterien angesteuert werden und/oder unterschiedliche geometrische Verhältnisse im Bereich der Austrittsöffnung (12b, 12b') aufweisen.

9. Verfahren nach einem der vorhergehenden Ansprüche, **dadurch gekennzeichnet, dass** innerhalb der Raumstruktur die wenigstens eine Materialkomponente (A) zur Erzeugung einer Gitterstruktur (90) oder Siebstruktur ausgebracht wird.

10. Verfahren nach einem der vorhergehenden Ansprüche, **dadurch gekennzeichnet, dass** innerhalb der Raumstruktur zwischen einem diskontinuierlichen Ausbringen von Tropfen (70) und einem kontinuierlichen Ausbringen eines Strangs (80) gewechselt wird.

11. Verfahren nach einem der vorhergehenden Ansprüche, **dadurch gekennzeichnet, dass** innerhalb der Raumstruktur ein Füllmuster erzeugt wird, das schichtweise vorzugsweise um einen Winkelversatz versetzt ausgebracht wird.

## Claims

1. A method for producing a three-dimensional object (50) by means of additive construction in a direct construction sequence from at least one solidifiable material, which, for processing, is prepared and liquefied into a fluid phase by means of a plastifying unit, that is used in injection moulding of plastics, and which hardens after being applied from a discharge unit (12),
wherein the solidifiable material for discharging drops of at least one material component is subject to a pressure in the material reservoir of at least 10 MPa,
wherein the at least one material component (A) is discharged under pressure in the direct construction sequence in a manner programmable by way of a control apparatus (60), wherein already parts of the material are mated with each other as a result of the discharge, and wherein the at least one material component produces structurally different regions of the three-dimensional object (50),
wherein the geometric relationships that are obtained during discharge of the fluid phase of the solidifiable material already correspond to the final geometric relationships of the three-dimensional object (50),
**characterised in that** configuration criteria for the structurally different regions of the object (50) are predetermined and transmitted to the control apparatus (60) on the basis of a selection,
that the discharge unit (12) is controlled by the control apparatus (60), during discharge of the at least one material component for the different regions of the object, on the basis of the selected configuration criteria for configuring a spatial structure which is desired for the respective region of the object, wherein, within the spatial structure, the at least one material component is applied drop by drop to produce a homogeneous and/or closest packing of spheres, and
that therewith the final geometric relationships are obtained externally and also inside the three-dimensional object (50).

2. A method according to Claim 1, **characterised in that** the drops are discharged in a volume of less than or equal to 1 mm³, particularly preferably in a range of from 0.01 to 0.5 mm³.

3. A method according to claim 1 or 2, **characterised in that** the final geometry already determines the inner physical structure of the object (50) at the stage of discharging the solidifiable material.

4. A method according to one of the preceding claims, **characterised in that** the different regions of the object (50) are produced from one and the same material component (A).

5. A method according to one of the preceding claims, **characterised in that** the configuration criteria include the quantity of the at least one material component (A) to be applied, according to its size and/or the duration of application.

6. A method according to one of the preceding claims, **characterised in that** the configuration criteria include at least one of the following influencing variables of the material component or the device for producing the object (50):
- the pressure on the material component (A) in a material reservoir (12c),
- the opening time and closing time of a cyclable outlet opening (12b) of the discharge unit (12),
- the temperature of the material component (A) to be applied,
- the opening stroke of a drive part (12a) of the closure mechanism for the cyclable outlet opening (12b),
- the ratio of the travel of a conveying means (26) to the quantity to be applied,
- the continuity of the application,
- the diameter of the outlet opening (12b).

7. A method according to one of the preceding claims, **characterised in that** the configuration criteria include the geometry of the spatial structure and/or the quality requirements made of the object (50).

8. A method according to one of the preceding claims, **characterised in that** the at least one material component (A, B) is applied through a plurality of discharge units (12, 12') which are controlled by the control apparatus (60) by different configuration criteria and/or have different geometric relationships in the region of the outlet opening (12b, 12b').

9. A method according to one of the preceding claims, **characterised in that**, within the spatial structure, the at least one material component (A) is applied to produce a grid structure (90) or screen structure.

10. A method according to one of the preceding claims, **characterised in that**, within the spatial structure, there is alternation between a discontinuous application of drops (70) and a continuous application of a strand (80).

11. A method according to one of the preceding claims, **characterised in that**, within the spatial structure, a filling pattern is generated which is applied from one layer to the next preferably with an angular offset.

## Revendications

1. Procédé de fabrication d'un objet tridimensionnel (50) par fabrication additive en une suite directe de dépôts d'au moins un matériau durcissable, qui est préparé, en vue de l'élaboration, au moyen d'une unité de plastification, comme celle qui est utilisée dans le moulage par injection de matériaux plastiques, et est mis sous la forme d'une phase fluide et qui durcit après la sortie d'une unité d'extraction (12),
dans lequel le matériau durcissable, en vue de l'application de gouttes d'au moins un composant de matériau, est soumis dans le réservoir de matériau à une pression d'au moins 10 MPa,
dans lequel le ou les composant(s) de matériau (A) dans la suite directe de dépôts est extrait sous pression au moyen d'un dispositif de commande (60) programmable, des parties du matériau étant déjà reliées l'une à l'autre par l'extraction, et le ou les composant(s) de matériau produi(sen)t des zones structurellement différentes de l'objet tridimensionnel (50), dans lequel lors de l'extraction de la phase fluide de matériau durcissable, les rapports géométriques obtenus correspondent déjà aux rapports géométriques finaux de l'objet tridimensionnel (50),
**caractérisé en ce que** des critères de forme sont donnés préalablement, grâce à un choix, au dispositif de commande (60) pour les zones structurellement différentes de l'objet (50),
**en ce que** l'unité d'extraction (12) est commandée, lors de l'application du ou des composant(s) de matériau pour les différentes zones de l'objet, par le dispositif de commande (60) à l'aide des critères de forme choisis pour la formation d'une structure spatiale souhaitée pour la zone respective de l'objet, à l'intérieur de la structure spatiale, le ou les composant(s) de matériau étant appliqué(s) goutte-à-goutte pour la production d'un empilement de billes homogène et/ou très dense, et **en ce qu'**ainsi, les rapports géométriques finaux sont obtenus à l'extérieur mais aussi à l'intérieur de l'objet tridimensionnel (50).

2. Procédé selon la revendication 1, **caractérisé en ce que** les gouttes sont extraites avec un volume inférieur à 1 mm³, de préférence dans la plage allant de 0,01 à 0,5 mm³.

3. Procédé selon la revendication 1 ou 2, **caractérisé en ce que** la géométrie finale détermine la structure physique interne de l'objet (50) dès l'extraction du matériau durcissable.

4. Procédé selon l'une des revendications précédentes, **caractérisé en ce que** les différentes zones de l'objet (50) sont produites à partir du seul et même composant de matériau (A).

5. Procédé selon l'une des revendications précédentes, **caractérisé en ce que** les critères de forme comprennent la quantité du ou des composants de matériau (A) à appliquer suivant sa taille et/ou la durée de l'application.

6. Procédé selon l'une des revendications précédentes, **caractérisé en ce que** les critères de forme comprennent au moins l'une des grandeurs d'influence suivantes du composant de matériau ou du dispositif de fabrication de l'objet (50) :
- la pression du composant de matériau (A) dans un réservoir de matériau (12c),
- le temps d'ouverture et le temps de fermeture d'un orifice de sortie (12b) cadençable de l'unité d'extraction (12),
- la température du composant de matériau à appliquer (A),
- la course d'ouverture d'une pièce d'entraînement (12a) du mécanisme de fermeture pour l'orifice de sortie cadençable (12b),
- le rapport du trajet d'un moyen d'acheminement (26) sur la quantité à appliquer,
- la continuité de l'application
- le diamètre de l'orifice de sortie (12b).

7. Procédé selon l'une des revendications précédentes, **caractérisé en ce que** les critères de forme comprennent la géométrie de la structure spatiale et/ou les exigences de qualité pour l'objet (50).

8. Procédé selon l'une des revendications précédentes, **caractérisé en ce que** le ou les composant(s) de matériau (A, B) sont extraits de plusieurs unités d'extraction (12, 12') qui sont commandées par le dispositif de commande (60) d'après des critères de forme différents et/ou présentent des rapports géométriques différents dans la zone de l'orifice de sortie (12b, 12b').

9. Procédé selon l'une des revendications précédentes, **caractérisé en ce qu'**à l'intérieur de la structure spatiale, le ou les composant(s) de matériau (A) est appliqué pour la production d'une structure réticulaire (90) ou d'une structure de tamis.

10. Procédé selon l'une des revendications précédentes, **caractérisé en ce qu'**à l'intérieur de la structure spatiale, il se produit un passage d'une application discontinue de gouttes (70) à une application continue d'une coulée (80).

11. Procédé selon l'une des revendications précédentes, caractérisé en qu'à l'intérieur de la structure spatiale, un modèle de remplissage est produit, lequel est appliqué couche par couche de préférence décalé angulairement.
